(19) Europäisches Patentamt
European Patent Office
Office européen des brevets

(11) **EP 4 053 548 B1**

(12) **EUROPEAN PATENT SPECIFICATION**

(45) Date of publication and mention
of the grant of the patent:
**06.09.2023 Bulletin 2023/36**

(21) Application number: **22153380.5**

(22) Date of filing: **26.01.2022**

(51) International Patent Classification (IPC):
**G01N 23/046** $^{(2018.01)}$

(52) Cooperative Patent Classification (CPC):
**G01N 23/046;** G01N 2223/404; G01N 2223/615;
G01N 2223/623

(54) **METHOD OF ANALYZING STRUCTURE OF RESIN MATERIAL**

VERFAHREN ZUR ANALYSE DER STRUKTUR EINES HARZMATERIALS

PROCÉDÉ D'ANALYSE DE STRUCTURE DE MATÉRIAU DE RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.03.2021 JP 2021033582**

(43) Date of publication of application:
**07.09.2022 Bulletin 2022/36**

(73) Proprietor: **MAZDA MOTOR CORPORATION**
Hiroshima 730-8670 (JP)

(72) Inventors:
• **KAWABE, Mitsuyoshi**
Hiroshima, 730-8670 (JP)
• **KATSURA, Daiji**
Hiroshima, 730-8670 (JP)
• **MAEDA, Tetsuya**
Hiroshima, 730-8670 (JP)

(74) Representative: **Frick, Robert
Lorenz Seidler Gossel
Rechtsanwälte Patentanwälte
Partnerschaft mbB
Widenmayerstraße 23
80538 München (DE)**

(56) References cited:
**JP-A- 2012 233 751    US-A1- 2016 069 824**

• **SCHILLING P J ET AL: "X-ray computed
microtomography of internal damage in fiber
reinforced polymer matrix composites",
COMPOSITES SCIENCE AND TECHNOLOGY,
ELSEVIER, AMSTERDAM, NL, vol. 65, no. 14, 1
July 2005 (2005-07-01), pages 2071-2078,
XP027688121, ISSN: 0266-3538 [retrieved on
2005-11-01]**
• **FUJIWARA NOBUYUKI ET AL: "Adaptation of
Hansen solubility parameter in evaluating
transparency of composite materials", HELIYON,
vol. 5, no. 12, 12 December 2019 (2019-12-12),
page e02833, XP055931634, GB ISSN: 2405-8440,
DOI: 10.1016/j.heliyon.2019.e02833**

EP 4 053 548 B1

**Description**

TECHNICAL FIELD

The present disclosure relates to a method of analyzing the structure of a resin material using radiation.

BACKGROUND ART

Typically, radiation analysis apparatuses have been used to analyze the internal structures of various substances. For example, an X-ray computed tomography (CT) apparatus captures an image of an analyte in a cross section as follows. The analyte is irradiated with X-rays to make the intensity of X-ray transmittance, which varies depending on the material and/or density of the analyte, visible as the shade of the image. Such a radiation analysis apparatus has difficulty in analyzing, with a high sensitivity, a resin material with a lower density. To address the problem, there are suggested methods of analyzing the structure of a resin material as in Japanese Unexamined Patent Publication No. 2019-112612 and Japanese Unexamined Patent Publication No. 2012-233751.

Japanese Unexamined Patent Publication No. 2019-112612 relates to detection of a resin molded body using an X-ray inspection machine as follows. Barium sulfate containing barium, which is a relatively large atom, is kneaded with resin to obtain the resin molded body. This facilitates detection of the resin molded body using the X-ray inspection machine.

Japanese Unexamined Patent Publication No. 2012-233751 relates to a method of detecting a change in the internal structure of the resin molded body from an X-ray transmission image as follows. A resin X-ray contrast agent penetrates the resin molded body to detect a change in the internal structure of the resin molded body based on a change in the penetration rate of the resin X-ray contrast agent, the resin X-ray contrast agent being made of a hydrocarbon-based compound with a mass absorption coefficient higher than that of the resin forming the resin molded body.

Further method of analyzing a structure of a resin material using radiation are disclosed in US 2016/069824 A1 and Schilling P.J., et al., "X-ray computed microtomography of internal damage in fiber reinforced polymer matrix composites", Composites Science and Technology, Elsevier, Amsterdam, NL, Vol. 65, No. 14, 1 July 2005, p. 2071-2078.

SUMMARY OF THE INVENTION

TECHNICAL PROBLEMS

In recent years, resin materials have been diversified, and resin materials having a fine porous structure with a skeleton diameter of about micrometers to hundreds of micrometers have been used in various fields. The resin material with such a porous structure has not only a very small density but also very small thickness and diameter. The luminance histogram or noise of gas in pores thus overlaps the luminance histogram of solid in X-ray CT analysis. Separation (i.e., binarization) of these overlapping luminance histograms causes different results from analyst to analyst. For the resin with the porous structure, an image close to an actual resin structure is thus hardly obtained with a high resolution. While gradient improvement and a finer contrast are needed, typical radiosensitizers are hardly uniformly dispersed in a resin material and thus not advantageous in solving the problems described above.

The technique disclosed herein relates to a method of analyzing the structure of a resin material, in which radiosensitizing molecules containing heavy elements are highly dispersed in the resin material. Accordingly, an image close to an actual resin structure is obtainable with a sufficient resolution.

SOLUTION TO THE PROBLEMS

In order to solve the problems described above, the present disclosure focuses on relative energy differences in a Hansen solubility parameter between a radiosensitizing molecule and a solvent and between resin and the solvent.

Specifically, the technique disclosed herein relates to a method of analyzing the structure of a resin material using radiation.

The method includes impregnating the resin material with a radiosensitizer.

The resin material contains thermoplastic resin.

The radiosensitizer contains a solvent and a radiosensitizing molecule that contains, as a heavy element, an element with an atomic number equal to or greater than that of fluorine.

A relative energy difference (REDi) represented by $R_{a1}/R_{01}$ is 1.8 or less in a case where $R_{01}$ is the interaction radius of the thermoplastic resin in a Hansen space and $R_{a1}$ is a distance between the Hansen solubility parameters of the thermoplastic resin and the solvent.

According to this configuration, the radiosensitizing molecule and the solvent are selected such that the relative energy difference (REDi) in the Hansen solubility parameters between the thermoplastic resin and the solvent is a predetermined value. Accordingly, the heavy elements can be uniformly dispersed into the thermoplastic resin structure. Uniform dispersion of the heavy elements while the resin structure is maintained can provide an image close to an actual resin structure with a sufficient resolution.

Note that in one preferred embodiment, the relative energy difference (REDi) between the thermoplastic resin and the solvent is 0.4 or less.

Selection of such a solvent for the thermoplastic resin can more reliably provide the image close to the actual resin structure.

In one more-preferred embodiment, a relative energy difference ($RED_2$) represented by $R_{a2}/R_{02}$ is 1.0 or less in a case where $R_{02}$ is the interaction radius of the radiosensitizing molecule in the Hansen space and $R_{a2}$ is a distance between the Hansen solubility parameters of the radiosensitizing molecule and the solvent.

A relative energy difference ($RED_2$) of 1.0 or less between the Hansen solubility parameters of the radiosensitizing molecule with the heavy element and the solvent allows high dispersion of the heavy element-containing radiosensitizing molecules, which are aggregated by themselves, in the solvent. Accordingly, the heavy elements can be more uniformly dispersed in the resin structure, which provides an image with a higher resolution.

In one preferred embodiment, the resin material is impregnated with the radiosensitizer set to a temperature equal to or higher than the glass transition point of the resin material.

The radiosensitizer set to the temperature equal to or higher than the glass transition point of the resin material can further improve the impregnation properties and dispersibility of the heavy element-containing radiosensitizing molecule in the resin material.

In one preferred embodiment, the heavy element is an element with an atomic number equal to or greater than that of iodine.

The radiosensitizer with the molecules containing the elements with the atomic number equal to or greater than that of iodine can further improve the absorption and diffusion sensitivity of the radiation. Accordingly, the image close to the actual resin structure is more reliably obtainable with a sufficient resolution.

In one preferred embodiment, the resin material is a porous material including a fiber body, a foam body, or a composite of a fiber body and a foam body.

It is significant to apply the method of analyzing the structure of the resin material according to the present disclosure which can provide, with a sufficient resolution, an image close to an actual resin structure of a porous material, such as a fiber body or a foam body, which has been hardly analyzed in the related art. It is also possible to obtain an image of only a resin structure, which is to be selectively observed, of a composite of a fiber body and a foam body.

ADVANTAGES OF THE INVENTION

As described above, the present disclosure provides the method of analyzing the structure of the resin material, in which the radiosensitizing molecules containing the heavy elements are highly dispersed in the resin material. Accordingly, the image close to the actual resin structure is obtainable with a sufficient resolution.

BRIEF DESCRIPTION OF THE DRAWINGS

FIG. 1 shows a flowchart for describing a structure analysis method of an embodiment.
FIG. 2 shows an X-ray CT image of a resin material of Example 1.
FIG. 3 shows an X-ray CT image of a resin material of Example 2.
FIG. 4 shows an X-ray CT image of a resin material of Example 3.
FIG. 5 shows an X-ray CT image of a resin material of Example 4.
FIG. 6 shows X-ray CT images of resin materials of Example 5 and Comparative Example 1.
FIG. 7 shows an X-ray CT image of a resin material of Example 6.
FIG. 8 shows a table of results of Examples 1 to 6 and Comparative Example 1.
FIG. 9 shows a graph of a preferred range of a relative energy difference (REDi).

DESCRIPTION OF EMBODIMENT

Hereinafter, an embodiment of the present disclosure will be described. The following description of the preferred embodiment is merely an example in nature, and is not intended to limit the scope, applications, or use of the present disclosure.

The present embodiment provides a method of analyzing the structure of a resin material using radiation. The resin material includes thermoplastic resin. A radiosensitizer contains a solvent and radiosensitizing molecules that contain, as heavy elements, elements with an atomic number equal to or greater than that of fluorine.

[Analyte]

-Resin Material-

In the method of analyzing the structure of the resin material according to the present embodiment, the resin material to be analyzed contains the thermoplastic resin. The thermoplastic resin is polyethylene terephthalate (PET) or polypropylene (PP).

The thermoplastic resins may be used alone or in combination. The resin material may further contain components, such as an additive, in addition to the resin.

The form of the resin material is not particularly limited, but is a porous material including a fiber body, a foam body, or a composite of a fiber body and a foam body in one preferred embodiment. The fiber body includes nonwoven fabric. The foam body includes foam, such as polyurethane foam, and an injection foam molding material. The skeleton diameters of the fiber body and the foam body are not particularly limited. For example, the fiber body and the foam body may have a fine structure of micrometers to hundreds of micrometers.

-Radiosensitizer-

In the method of analyzing the structure of the resin material according to the present embodiment, the resin material described above is analyzed after being impregnated with the radiosensitizer. The radiosensitizer contains the radiosensitizing molecules and the solvent.

The radiosensitizing molecules contain, as the heavy elements, the elements with the atomic number equal to or greater than that of fluorine. An element with an atomic number equal to or greater than that of fluorine is believed to exhibit a greater radiosensitizing effect than an element having an atomic number smaller than that of fluorine. In particular, a halogen compound is known to exhibit a great radiosensitizing effect. The radiosensitizing molecules, into which the elements with the atomic number equal to or greater than that of fluorine have been introduced as the heavy elements, are dispersed in the resin material. This increases a difference in X-ray transmittance between the resin structure and a pore, which can provide a high-contrast image. The radiosensitizing molecules are not particularly limited. Examples include an iodine-containing compound such as triiodobenzene; a bromine-containing compound, a chlorine-containing compound, and a fluorine-containing compound. In one preferred embodiment, the heavy element is an element with an atomic number equal to or greater than that of iodine. Note that plural types of heavy elements may be combined and introduced into the radiosensitizing molecules.

The solvent is an organic solvent in which the radiosensitizing molecules are soluble. Examples of the solvent include toluene and THF. The type of solvent is selected depending on the type of radiosensitizing molecule to be dissolved and the type of resin material to be analyzed.

In the method of analyzing the structure of the resin material according to the present embodiment, an appropriate combination of the radiosensitizing molecules, the solvent, and the resin is selected depending on relative energy differences derived from Hansen solubility parameters.

-Hansen Solubility Parameters-

The Hansen Solubility Parameters (HSP) are an index of solubility showing the degree of solubility of a substance in another substance. HSP values can be calculated by a method described in Hansen Solubility Parameters, A User's Handbook, Charles M. Hansen (2007). The HSP ($\delta$) includes three parameters (with a unit of $MPa^{1/2}$) of an energy ($\delta d$) from dispersion force between molecules, an energy ($\delta p$) from dipolar force between molecules, and an energy ($\delta h$) from hydrogen bonding between molecules. These three parameters are regarded as coordinates in a three-dimensional space called a "Hansen space," and have a relationship of "$\delta^2 = (\delta D)^2 + (\delta P)^2 + (\delta H)^2$." The Hansen solubility parameters of two substances are placed in the Hansen space. At this point, the substances at a smaller distance in the Hansen solubility parameters are determined to be highly soluble.

The HSP of some commonly used substances is stored in a database. Referring to the database, the HSP of a desired substance may be obtained. For example, the Hansen solubility parameters ($\delta d$, $\delta p$, $\delta h$) of the solvent are as follows: toluene (18, 1.4, 2), THF (16.8, 5.7, 8), hexane (14.9, 0, 0), and ethanol (15.8, 8.8, 19.4). The HSP can be calculated using computer software (e.g., Hansen Solubility Parameters in Practice (HSPiP)).

Assume that the Hansen solubility parameters of the resin are ($\delta_{d1}$, $\delta_{p1}$, $\delta_{h1}$), the Hansen solubility parameters of the solvent are ($\delta_{d2}$, $\delta_{p2}$, $\delta_{h2}$), and Ra is a distance between the Hansen solubility parameters of the resin and the solvent in the Hansen space. In this case, the distance Ra of the Hansen solubility parameters can be calculated by

Equation (1) below:

$$(Ra)^2 = 4(\delta_{d2} - \delta_{d1})^2 + (\delta_{p2} - \delta_{p1})^2 + (\delta_{h2} - \delta_{h1})^2 \qquad (1)$$

Further, assume that the resin has the value of an interaction radius $R_0$ and a sphere with a radius $R_0$ about the Hansen solubility parameter coordinates of the resin is within the Hansen space. The relative energy difference (RED) is then represented by $R_a/R_0$. The resin is insoluble in the solvent in the case of RED > 1, and is solvable in the case of RED < 1.

In the method of analyzing the structure of the resin material according to the present embodiment, the resin material and the solvent are selected such that a relative energy difference (REDi) represented by $R_{a1}/R_{01}$ is 1.8 or less, in a case where $R_{01}$ is the interaction radius of the thermoplastic resin in the Hansen space and $R_{a1}$ is a distance between the Hansen solubility parameters of the thermoplastic resin and the solvent. In one preferred embodiment, a combination of the thermoplastic resin and the solvent is selected such that the relative energy difference (REDi) between the thermoplastic resin and the solvent is 0.4 or less.

In one preferred embodiment, a combination of the radiosensitizing molecules and the solvent is selected such that a relative energy difference (RED$_2$) represented by $R_{a2}/R_{02}$ is 1.0 or less, in a case where $R_{02}$ is the interaction radius of the radiosensitizing molecules in the Hansen space and $R_{a2}$ is a distance between the Hansen solubility parameters of the radiosensitizing molecules and the solvent.

[Structure Analysis Method]

-Analyzer-

The method of analyzing the structure of the resin material according to the present embodiment is performed by a three-dimensional structure analyzer using radiation, specifically, for example, an X-ray CT apparatus. The X-ray CT apparatus includes: at least an X-ray irradiator that irradiates an analyte with X-rays; and an X-ray detector that faces the X-ray irradiator with the analyte interposed therebetween and measures the X-rays transmitted through the analyte.

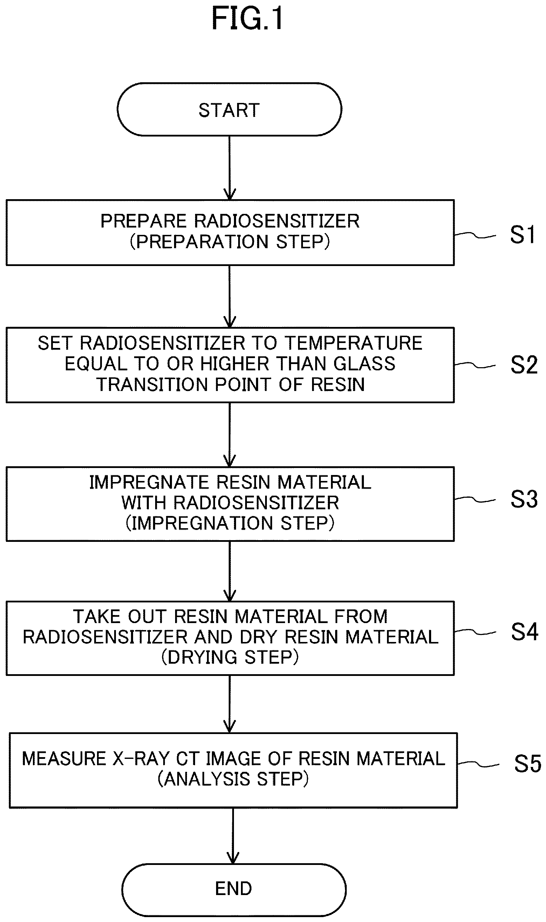

The method of analyzing the structure of the resin material according to the present embodiment is performed in the order shown in FIG. 1.

-Preparation Step-

First, an appropriate combination of the radiosensitizing molecules, the solvent, and the resin is selected considering the values of the relative energy differences (RED$_1$ and RED$_2$). Then, in a preparation step S1, the radiosensitizing molecules are dissolved into the solvent to prepare the radiosensitizer.

-Impregnation Step-

Next, the resin material is impregnated with the radiosensitizer. In this impregnation step, first, the radiosensitizer is set to a temperature equal to or higher than the glass transition point of the thermoplastic resin contained in the resin material (S2). In this state, the resin material is impregnated for a predetermined period of time (S3) in one preferred embodiment. For example, if polyethylene terephthalate is the thermoplastic resin contained in the resin material, the impregnation temperature is about 75°C. In the case of polypropylene, the impregnation temperature is about 25°C. After a lapse of the predetermined period of time, the resin material is cooled to room temperature, while being impregnated.

-Drying Step-

Next, in a drying step S4, the resin material is taken out of the radiosensitizer and dried under reduced pressure.

-Analysis Step-

Next, in an analysis step S5, the dried resin material is, as a sample, measured using the X-ray CT apparatus. The obtained data is analyzed to create a cross-sectional image, whose luminance histogram is binarized to separate the resin material into gas (pores) and a solid (resin), thereby grasping the structure of the resin material.

[Examples]

In examples described in the present specification, 1,3,5-triiodobenzene was commonly used as the radiosensitizing molecules.

In Example 1, 30.4 mg of 1,3,5-triiodobenzene as the radiosensitizing molecules and 882 mg of toluene as the solvent were put into a glass container, and were heated at 75°C for ten minutes to obtain a radiosensitizer solution. Polypropylene, which is a fiber resin with a porous structure (with a fiber size of 26 $\mu$m and a fiber length of 32 mm), was added as the resin material to the radiosensitizer, and was heated at 75°C for 20 minutes. Next, the resin material and the radiosensitizer were cooled to room temperature. The resin material was then taken out of the radiosensitizer, and was dried under reduced pressure.

The resin material treated with the radiosensitizer in this manner was compared to an untreated resin material. For the purpose, each of the treated and untreated resin materials was packed into a straw-shaped support to prepare a sample. The two samples were bundled to be simultaneously measured with the X-ray CT apparatus (i.e., nano3DX manufactured by Rigaku Corporation). Note that the X-ray CT image was captured in a size of 1024 $\times$ 1024 pixels and 16 bit.

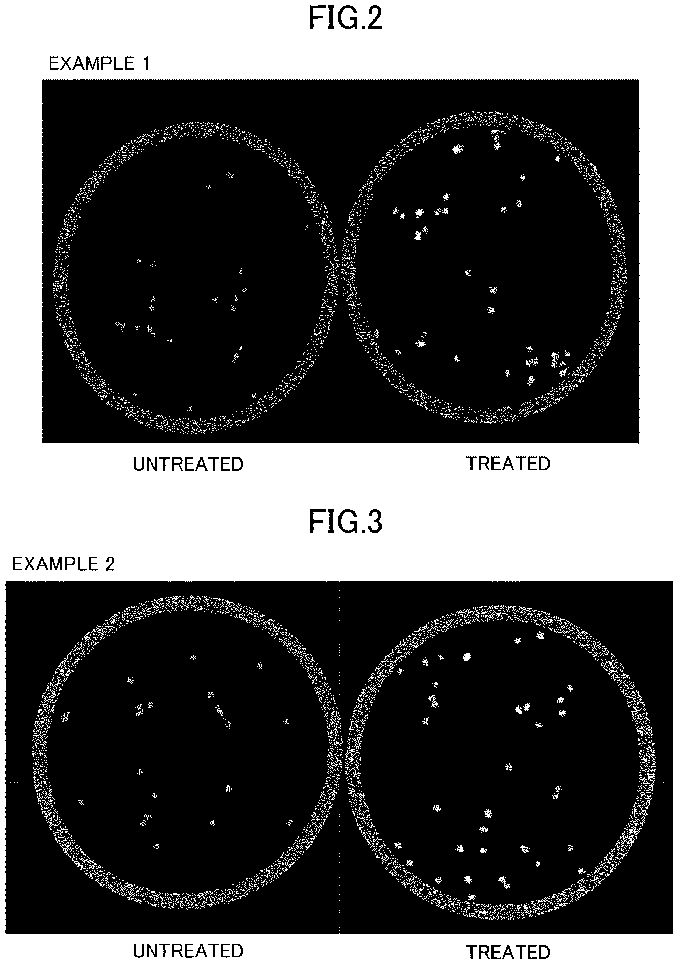

FIG. 2 shows a cross-sectional image of Example 1 captured by the X-ray CT apparatus. The image of "treated" polypropylene, which was treated with the radiosensitizer, had a higher contrast than that of "untreated" polypropylene. Such a difference could be also visually confirmed.

In addition, the average gradient of the cross-sectional image captured by the X-ray CT apparatus was calculated. A difference in the average gradient between the "treated" and "untreated" resin materials was obtained. With such a difference, whether or not the gradient was increased by treatment with the radiosensitizer as compared to the case without treatment was evaluated.

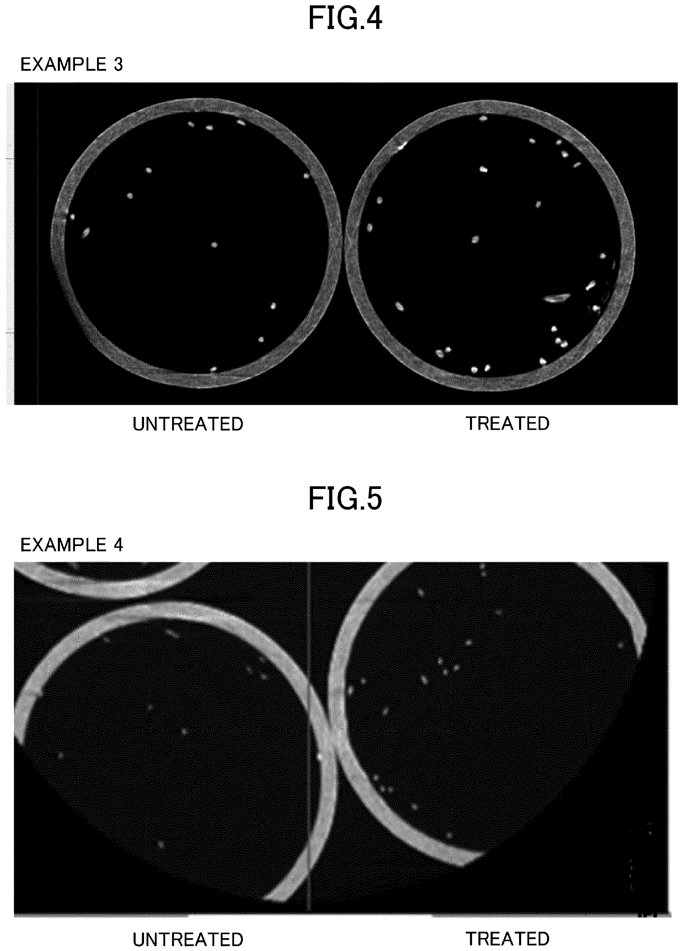

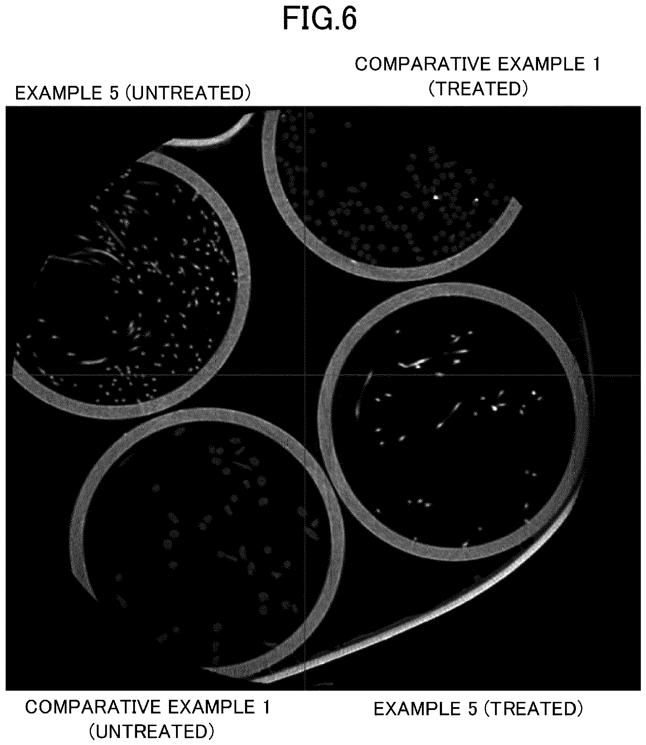

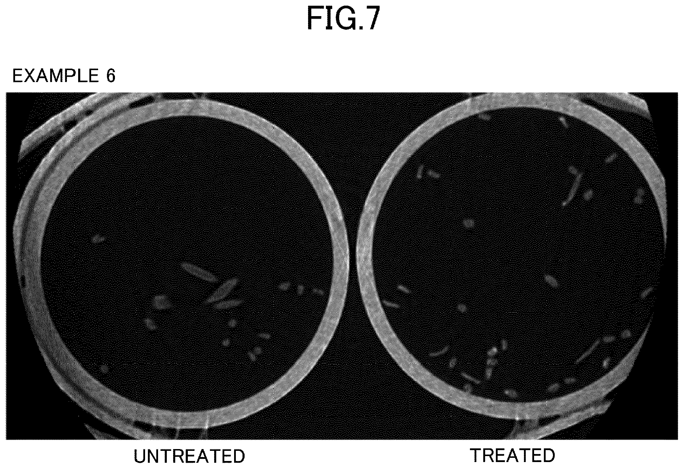

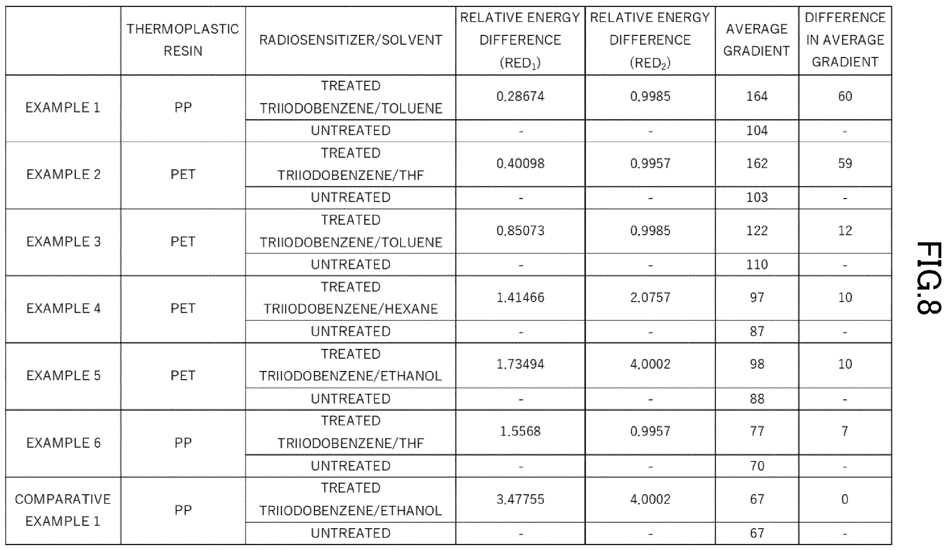

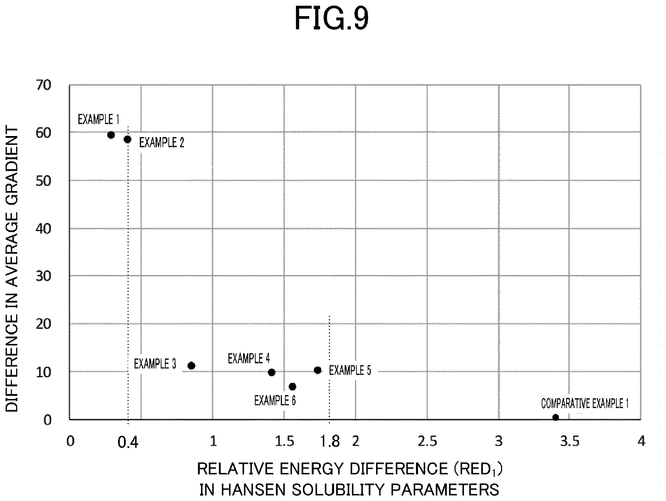

Next, in each of Examples 2 to 6 and Comparative Example 1, another combination of the thermosetting resin and the solvent was employed to obtain the X-ray CT images of the resin material treated with the radiosensitizer and the untreated resin material. The difference in the average gradient was obtained as in Example 1 to determine whether or not there was improvement in the gradient. FIGS. 3 to 7 show the cross-sectional images captured by the X-ray CT apparatus in Examples 2 to 6 and Comparative Example 1. In addition, FIG. 8 shows the combinations of the thermoplastic resin and the solvent in Examples 1 to 6 and Comparative Example 1. The obtained results are plotted as shown in FIG. 9. A preferred range of the relative energy difference (REDi) is then shown.

In Comparative Example 1, the relative energy difference (REDi) in the Hansen solubility parameters between the thermoplastic resin and the solvent exceeds 1.8. In this example, the difference in the average gradient is 0, that is, no improvement in the CT image was found between the "treated" and "untreated" resins.

In each of Examples 1 to 6, the relative energy difference (REDi) in the Hansen solubility parameters between the thermoplastic resin and the solvent is 1.8 or less. In each example, the "treated" resin has a higher average gradient than that of the "untreated" resin, that is, improvement in the CT image by the treatment with the radiosensitizer was found.

In addition, in Examples 1 and 2, the relative energy difference (REDi) in the Hansen solubility parameters between the thermoplastic resin and the solvent is 0.4 or less, and the relative energy difference ($RED_2$) in the Hansen solubility parameters between the radiosensitizing molecules and the solvent is 1.0 or less. In each example, the "treated" resin has a higher average gradient than that of the "untreated" resin, that is, great improvement in the CT image by the treatment with the radiosensitizer was found.


**Claims**

**1.** A method of analyzing a structure of a resin material using radiation, the method comprising:

impregnating the resin material with a radiosensitizer, **characterized in that** the resin material contains thermoplastic resin selected from the group of polypropylene (PP) and polyethylene terephthalate (PET), and the radiosensitizer contains a solvent, selected from the group consisting of toluene, THF, hexane, and ethanol, and a radiosensitizing molecule that contains, as a heavy element, an element with an atomic number equal to or greater than that of fluorine, and wherein
a relative energy difference (REDi) represented by $R_{a1}/R_{01}$ is 1.8 or less, where $R_{01}$ is an interaction radius of the thermoplastic resin in a Hansen space and $R_{a1}$ is a distance between Hansen solubility parameters of the thermoplastic resin and the solvent.

**2.** The method of claim 1, wherein the relative energy difference (REDi) between the thermoplastic resin and the solvent is 0.4 or less.

**3.** The method of claim 1 or 2, wherein a relative energy difference (RED$_2$) represented by R$_{a2}$/R$_{02}$ is 1.0 or less, where R$_{02}$ is an interaction radius of the radiosensitizing molecule in the Hansen space and R$_{a2}$ is a distance between the Hansen solubility parameters of the radiosensitizing molecule and the solvent.

**4.** The method of any one of claims 1 to 3, wherein the resin material is impregnated with the radiosensitizer, the radiosensitizer being set to a temperature equal to or higher than a glass transition point of the resin material.

**5.** The method of any one of claims 1 to 4, wherein
the heavy element is an element with an atomic number equal to or greater than that of iodine.

**6.** The method of any one of claims 1 to 5, wherein
the resin material is a porous material including a fiber body, a foam body, or a composite of a fiber body and a foam body.

**Patentansprüche**

**1.** Verfahren zur Analyse der Struktur eines Harzmaterials mittels Bestrahlung, wobei das Verfahren umfasst:
Durchtränken des Harzmaterials mit einem Radiosensitizer, **dadurch gekennzeichnet, dass** das Harzmaterial ein thermoplastisches Harz enthält, das ausgewählt ist aus der Gruppe aus Polypropylen (PP) und Polyethylenterephthalat (PET), und der Radiosensitizer ein Lösungsmittel enthält, das ausgewählt ist aus der Gruppe bestehend aus Toluol, THF, Hexan und Ethanol, und einem Radiosensitizermolekül, das als Schwerelement ein Element mit einer Ordnungszahl größer gleich der von Fluor enthält, wobei eine relative Energiedifferenz (RED$_1$), repräsentiert durch R$_{a1}$/R$_{01}$, 1,8 oder weniger beträgt, wobei R$_{01}$ ein Interaktionsradius des thermoplastischen Harzes in einem Hansen-Raum ist und R$_{a1}$ ein Abstand zwischen Hansenlöslichkeitsparametern des thermoplastischen Harzes und des Lösungsmittels ist.

**2.** Verfahren nach Anspruch 1, wobei
die relative Energiedifferenz (RED$_1$) zwischen dem thermoplastischen Harz und dem Lösungsmittel 0,4 oder weniger beträgt.

**3.** Verfahren nach Anspruch 1 oder 2, wobei
eine relative Energiedifferenz (RED$_2$), repräsentiert durch R$_{a2}$/R$_{02}$, 1,0 oder weniger beträgt, wobei R$_{02}$ ein Interak-tionsradius des Radiosensitizermoleküls in dem Hansen-Raum ist und R$_{a2}$ ein Abstand zwischen den Hansenlöslichkeitsparametern des Radiosensitizermoleküls und des Lösungsmittels ist.

**4.** Verfahren nach einem der Ansprüche 1 bis 3, wobei
das Harzmaterial mit dem Radiosensitizer durchtränkt wird, wobei der Radiosensitizer auf eine Temperatur eingestellt ist, die größer gleich einem Glasübergangspunkt des Harzmaterials ist.

**5.** Verfahren nach einem der Ansprüche 1 bis 4, wobei
das Schwerelement ein Element mit einer Ordnungszahl größer gleich der von Jod ist.

**6.** Verfahren nach einem der Ansprüche 1 bis 5, wobei
das Harzmaterial ein poröses Material mit einem Faserkörper, einem Schaumkörper oder einem Verbund aus einem Faserkörper und einem Schaumkörper ist.

**Revendications**

**1.** Procédé d'analyse d'une structure d'un matériau de résine à l'aide de rayonnements, le procédé comprenant :
l'imprégnation du matériau de résine avec un radiosensibilisateur, **caractérisé en ce que** le matériau de résine contient une résine thermoplastique choisie dans le groupe constitué par le polypropylène (PP) et le téréphtalate de polyéthylène (PET), et le radiosensibilisateur contient un solvant choisi dans le groupe constitué par le toluène, le THF, l'hexane et l'éthanol, et une molécule de radiosensibilisation contenant, en tant qu'élément lourd, un élément à numéro atomique égal ou supérieur à celui du fluor, et dans lequel une différence d'énergie relative (RED$_1$), représentée par R$_{a1}$/R$_{01}$, est égale ou inférieure à 1,8, où R$_{01}$ est un rayon d'interaction de la résine thermoplastique dans un espace Hansen et R$_{a1}$ est un écart entre les paramètres de solubilité Hansen de la résine thermoplastique et du solvent.

2. Le procédé de la revendication 1, dans lequel
la différence d'énergie relative (RED$_1$) entre la résine thermoplastique et le solvent est égale ou inférieure à 0,4.

3. Le procédé des revendications 1 ou 2, dans lequel

une différence d'énergie relative (RED$_2$), représentée par R$_{a2}$/R$_{02}$, est égale ou inférieure à 1,0,
où R$_{02}$ est un rayon d'interaction de la molécule de radiosensibilisation dans l'espace Hansen et R$_{a2}$ est un écart entre les paramètres de solubilité Hansen de la molécule de radiosensibilisation et du solvent.

4. Le procédé de l'une quelconque des revendications 1 à 3, dans lequel
le matériau de résine est imprégné du radiosensibilisateur, le radiosensibilisateur étant durci à une température égale ou supérieure à un point de transition vitreuse du matériau de résine.

5. Le procédé de l'une quelconque des revendications 1 à 4, dans lequel l'élément lourd est un élément à numéro atomique égal ou supérieur à celui de l'iode.

6. Le procédé de l'une quelconque des revendications 1 à 5, dans lequel
le matériau de résine est un matériau poreux comprenant un corps de fibres, un corps de mousse ou un composite d'un corps de fibres et d'un corps de mousse.

# FIG.1

```
          ┌─────────────┐
          │    START    │
          └──────┬──────┘
                 │
                 ▼
   ┌───────────────────────────────┐
   │   PREPARE RADIOSENSITIZER     │      S1
   │     (PREPARATION STEP)        │
   └───────────────┬───────────────┘
                   │
                   ▼
   ┌───────────────────────────────┐
   │ SET RADIOSENSITIZER TO        │
   │ TEMPERATURE EQUAL TO OR       │      S2
   │ HIGHER THAN GLASS             │
   │ TRANSITION POINT OF RESIN     │
   └───────────────┬───────────────┘
                   │
                   ▼
   ┌───────────────────────────────┐
   │   IMPREGNATE RESIN MATERIAL   │
   │   WITH RADIOSENSITIZER        │      S3
   │   (IMPREGNATION STEP)         │
   └───────────────┬───────────────┘
                   │
                   ▼
   ┌───────────────────────────────┐
   │ TAKE OUT RESIN MATERIAL FROM  │
   │ RADIOSENSITIZER AND DRY       │      S4
   │ RESIN MATERIAL                │
   │ (DRYING STEP)                 │
   └───────────────┬───────────────┘
                   │
                   ▼
   ┌───────────────────────────────┐
   │ MEASURE X-RAY CT IMAGE OF     │      S5
   │ RESIN MATERIAL                │
   │ (ANALYSIS STEP)               │
   └───────────────┬───────────────┘
                   │
                   ▼
          ┌─────────────┐
          │     END     │
          └─────────────┘
```

# FIG.2

EXAMPLE 1

UNTREATED          TREATED

# FIG.3

EXAMPLE 2

UNTREATED          TREATED

# FIG.4

EXAMPLE 3

UNTREATED  TREATED

# FIG.5

EXAMPLE 4

UNTREATED  TREATED

# FIG.6

EXAMPLE 5 (UNTREATED)

COMPARATIVE EXAMPLE 1
(TREATED)

COMPARATIVE EXAMPLE 1
(UNTREATED)

EXAMPLE 5 (TREATED)

# FIG.7

EXAMPLE 6

UNTREATED                    TREATED

# FIG.8

| | THERMOPLASTIC RESIN | RADIOSENSITIZER/SOLVENT | RELATIVE ENERGY DIFFERENCE ($RED_1$) | RELATIVE ENERGY DIFFERENCE ($RED_2$) | AVERAGE GRADIENT | DIFFERENCE IN AVERAGE GRADIENT |
|---|---|---|---|---|---|---|
| EXAMPLE 1 | PP | TREATED TRIIODOBENZENE/TOLUENE | 0.28674 | 0.9985 | 164 | 60 |
| | | UNTREATED | - | - | 104 | - |
| EXAMPLE 2 | PET | TREATED TRIIODOBENZENE/THF | 0.40098 | 0.9957 | 162 | 59 |
| | | UNTREATED | - | - | 103 | - |
| EXAMPLE 3 | PET | TREATED TRIIODOBENZENE/TOLUENE | 0.85073 | 0.9985 | 122 | 12 |
| | | UNTREATED | - | - | 110 | - |
| EXAMPLE 4 | PET | TREATED TRIIODOBENZENE/HEXANE | 1.41466 | 2.0757 | 97 | 10 |
| | | UNTREATED | - | - | 87 | - |
| EXAMPLE 5 | PET | TREATED TRIIODOBENZENE/ETHANOL | 1.73494 | 4.0002 | 98 | 10 |
| | | UNTREATED | - | - | 88 | - |
| EXAMPLE 6 | PP | TREATED TRIIODOBENZENE/THF | 1.5568 | 0.9957 | 77 | 7 |
| | | UNTREATED | - | - | 70 | - |
| COMPARATIVE EXAMPLE 1 | PP | TREATED TRIIODOBENZENE/ETHANOL | 3.47755 | 4.0002 | 67 | 0 |
| | | UNTREATED | - | - | 67 | - |

# FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019112612 A
- JP 2012233751 A
- US 2016069824 A1

**Non-patent literature cited in the description**

- X-ray computed microtomography of internal damage in fiber reinforced polymer matrix composites. **SCHILLING P.J. et al.** Composites Science and Technology. Elsevier, 01 July 2005, vol. 65, 2071-2078
- **CHARLES M. HANSEN.** Hansen Solubility Parameters, A User's Handbook. 2007